# EUROPÄISCHE PATENTSCHRIFT

(11) **EP 3 538 244 B1**
(45) Veröffentlichungstag und Bekanntmachung des Hinweises auf die Patenterteilung: **03.01.2024**
(21) Anmeldenummer: 17797341.9
(22) Anmeldetag: 10.11.2017
(51) Int. Cl.: B01D 35/153, B01D 35/16

(54) **FILTERSYSTEM UND FILTERELEMENT**
FILTER SYSTEM AND FILTER ELEMENT
SYSTÈME DE FILTRE ET ÉLÉMENT FILTRANT

(30) Priorität: 11.11.2016 DE 102016013388
(43) Veröffentlichungstag der Anmeldung: 18.09.2019
(73) Patentinhaber: MANN+HUMMEL GmbH, 71636 Ludwigsburg (DE)
(72) Erfinder: JAINEK, Herbert, 74074 Heilbronn (DE)
(74) Vertreter: Mann + Hummel Intellectual Property
(86) Internationale Anmeldenummer: PCT/EP2017/078896
(87) Internationale Veröffentlichungsnummer: WO 2018/087294

(56) Entgegenhaltungen:
- DE-A1- 10 235 902
- DE-A1- 10 353 424
- DE-A1-102009 049 868

## Beschreibung

### Technisches Gebiet

Die Erfindung betrifft ein Filtersystem für ein zu filterndes Flüssigmedium, insbesondere Kraftstoff oder Öl, insbesondere für eine Brennkraftmaschine. Das Filtersystem umfasst ein Filtergehäuse mit einem Gehäusetopf und mit einem Gehäusedeckel, der mittels einer Schraubbewegung auf den Gehäusetopf aufschraubbar oder in den Gehäusetopf einschraubbar ist, um den Gehäusetopf zu verschließen. Der Gehäusetopf weist einen Ablaufkanal mit einer bodenseitigen Ablauföffnung für das Flüssigmedium auf. Im Filtergehäuse ist ein Filterelement anordenbar, das an seiner unteren Endscheibe ein Verschlusselement aufweist, das zur Längsachse des Filterelements exzentrisch angeordnet ist und welches sich in einer vorgegebenen Einbauposition des Filterelements im Filtergehäuse dichtend über die bodenseitige Ablauföffnung des Ablaufkanals des Gehäusetopfs erstreckt oder in die bodenseitige Ablauföffnung des Ablaufkanals dichtend hineinerstreckt. Darüber hinaus betrifft die Erfindung ein Filterelement.

### Stand der Technik

DE 102 011 088 742 A1 offenbart ein Filterelement mit einer Endscheibe, die eine randständige Positionierkontur aufweist. Um das Filterelement im Filtergehäuse zu montieren, muss das Filterelement zuerst passend am Filtergehäuse ausgerichtet werden, bevor das Filterelement in das Filtergehäuse eingesetzt werden kann. Eine Montage des Filtersystems ist deshalb vergleichsweise unkomfortabel und schwierig.

DE 103 53 424 A1 offenbart einen Flüssigkeitsfilter mit einem Filtergehäuse, umfassend ein topfförmiges unteres Filtergehäuse, einen über ein Umfangsgewinde auf das untere Filtergehäuse aufschraubbaren, das Filtergehäuse verschließenden Schraubdeckel und ein austauschbar in das Filtergehäuse einsetzbares Ringfilterelement, das reibschlüssig drehbar über einen axialen Rastverschluss mit dem Schraubdeckel verbindbar ist und an seiner dem Boden des unteren Filtergehäuses zuzuordnenden Stirnseite ein exzentrisch angeordnetes Steckverschlusselement zur Bildung eines Steckverschlusses mit einem komplementär in dem Boden des unteren Filtergehäuses vorgesehenen zweiten Steckverschlusselement aufweist, wobei zwischen dem Ringfilterelement und dem Boden des unteren Filtergehäuses zusammenwirkende Führungsmittel für eine schließfähige Ausrichtung der beiden Steckverschlusselemente vorgesehen sind.

DE 102 009 049 868 A1 offenbart ein weiteres Filtersystem, bei dem der Filtertopf mit einem Dom versehen ist. Der Dom weist eine Nut auf. Ein im Filtertopf anzuordnendes Filterelement weist innenseitig ein Führungselement auf, das zur Nut des Filtergehäusedoms aufwändig händisch fluchtend ausgerichtet werden muss, um das Filterelement in das Filtergehäuse einzusetzen. Der gehäusefest angeordnete Dom bedingt zudem eine Querschnittsverengung des Filtertopfs und damit einen unerwünschten Druckverlust des durch das Filtersystem strömenden Fluids. Das Filterelement weist an seiner unteren Endscheibe einen exzentrisch angeordneten Verschlussstopfen zum Verschließen eines filtergehäuseseitigen Ablaufkanals für das Fluid auf.

Die bei Filtersystemen eingesetzten Filterelemente müssen als Verschleißteile im Bedarfsfall einfach, zügig und sicher ausgetauscht werden können. Zugleich muss in Anbetracht der Typenvielfalt von Filterelementen im Kraftfahrzeugbereich ein Einsatz eines ungeeigneten Filterelements zuverlässig unterbunden werden, um Fehlfunktionen sowie Beschädigungen nachgeordneter Aggregate zu vermeiden.

Der Erfindung liegt deshalb die Aufgabe zugrunde, ein eingangs genanntes Filtersystem zur Verfügung zu stellen, das eine besonders zügige, einfache, und sichere Montage des Filterelements im Filtergehäuse ermöglicht und bei dem zugleich der Einsatz eines ungeeigneten Filterelements verhindert wird. Darüber hinaus soll ein Filterelement für ein solches Filtersystem angegeben werden.

Die das Filtersystem betreffende Aufgabe wird gelöst durch ein Filtersystem mit den in Anspruch 1 angegebenen Merkmalen. Das erfindungsgemäße Filterelement weist die in Anspruch 8 angegebenen Merkmale auf. Weiterbildungen der Erfindung sind in den Unteransprüchen sowie in der Beschreibung angegeben.

### Offenbarung der Erfindung

Das erfindungsgemäße Filtersystem dient dem Filtern eines Flüssigmediums, bevorzugt dem Filtern von Kraftstoff oder Öl, insbesondere für eine Brennkraftmaschine. Das Filtersystem umfasst ein Filtergehäuse mit einem Gehäusetopf und mit einem Gehäusedeckel, der mittels einer Schraubbewegung auf den Gehäusetopf aufschraubbar oder in den Gehäusetopf einschraubbar ist, um den Gehäusetopf zu verschließen. Im Filtergehäuse ist ein Filterelement anordenbar. Der Filtertopf weist einen Ablaufkanal mit einer bodenseitigen Ablauföffnung für das Flüssigmedium auf. Die Ablauföffnung ermöglicht bei der Entnahme des Filterelements ein Ablaufen des im Filtergehäuse rohseitig bzw. auch reinseitig angeordneten Flüssigmediums. Das Filterelement weist an seiner unteren Endscheibe eine Ausnehmung und ein Verschlusselement auf, das zur Längsachse des Filterelements exzentrisch angeordnet ist. Das Verschlusselement erstreckt sich in einer vorgegebenen Betriebs- bzw. Einbauposition des Filterelements im Filtergehäuse dichtend über die bodenseitige Ablauföffnung des Ablaufkanals des Gehäusetopfs oder in die bodenseitige Ablauföffnung des Ablaufkanals des Gehäusetopfs dichtend hinein. Der Ablaufkanal wird somit im Filterbetrieb des Filtersystems durch das Filterelement fluiddicht verschlossen. Der Gehäusetopf weist eine zu der Ausnehmung des Filterelements korrespondierende Positionierhilfe für das Filterelement auf. Das Filterelement ist mittels der Schraubbewegung des Gehäusedeckels gemeinsam mit dem Gehäusedeckel axial in Richtung der Ablauföffnung bewegbar und um seine Längsachse so weit drehbar, bis die Positionierhilfe, bevorzugt in axialer Richtung, in die Ausnehmung der unteren Endscheibe eingreift, um so das Filterelement in einer vorgegebenen Drehlage mit einem zur Ablauföffnung axial fluchtend ausgerichteten Verschlusselement zu arretieren. Das Filterelement ist alleinig mittels der Einschraubbewegung des Gehäusedeckels in seine vorgegebene Einbauposition im Filtergehäuse bewegbar, in der sich das Verschlusselement dichtend über die bodenseitige Ablauföffnung des Ablaufkanals des Gehäusetopfs erstreckt oder in die bodenseitige Ablauföffnung des Ablaufkanals des Gehäusetopfs in axialer Richtung dichtend hineinerstreckt. Die Dichtfläche des Verschlusselements und das axiales Ende der Ausnehmung sind bezogen auf die Längsachse des Filtergehäuses beabstandet angeordnet.

Bei dem erfindungsgemäßen Filtersystem kann das Filterelement somit beim Einschrauben des Gehäusedeckels in/auf den Gehäusetopf von dem Gehäusedeckel ohne ein weiteres Zutun einer Bedienperson zunächst mit seinem Verschlusselement exakt axial fluchtend zur Ablauföffnung ausgerichtet und durch eine fortgesetzte Einschraubbewegung, d. h. ein Festschrauben, des Gehäusedeckels am Gehäusetopf, zwangsläufig in seine vorgesehene Einbauposition überführt werden. Das Filterelement ist dazu vorzugsweise reibschlüssig und/oder formschlüssig, insbesondere verrastet, an dem Gehäusedeckel gehalten. Alternativ ist das Filterelement reibschlüssig und/oder formschlüssig an einem Zusatzbauteil, beispielsweise einer Ventilhalterung für ein Bypassventil, gehalten, insbesondere verrastet, das seinerseits mit dem Gehäusedeckel verbunden ist.

Die Anordnung der Ablauföffnung des Ablaufkanals im Gehäusetopf relativ zur Positionierhilfe am Gehäusetopf korrespondiert mit der Anordnung des Verschlusselements am Filterelement relativ zur Ausnehmung der unteren Endscheibe des Filterelements.

Es versteht sich, dass der Gehäusedeckel und der Gehäusetopf zueinander korrespondierende Gewindeabschnitte aufweisen.

Das Verschlusselement kann in vielfältigster Art und Weise ausgeformt ein.

So kann das Verschlusselement in einer vorteilhaften Ausführung in der Form eines Verschlussstopfens gebildet sein, beispielsweise zylinderförmig oder auch quaderförmig, der sich in einer vorgegebenen Betriebs- bzw. Einbauposition des Filterelements im Filtergehäuse in den Ablaufkanal des Gehäusetopfs dichtend hinein erstreckt. An seinem freien Ende kann der Verschlussstopfen eine Verjüngung aufweisen, um ein Einführen des Verschlussstopfens in die Ablauföffnung zu erleichtern. Der Verschlussstopfen kann ein zusätzliches Dichtelement, beispielsweise einen radial wirkenden O-Ring, aufweisen, um die Dichtheit des Verschlusses zu verbessern.

In einer besonders vorteilhaften Ausführung erstreckt sich das Verschlusselement in einer vorgegebenen Betriebs- bzw. Einbauposition des Filterelements im Filtergehäuse dichtend über die bodenseitige Ablauföffnung des Gehäusetopfs. Das Verschlusselement kann glockenförmig ausgebildet sein oder die Form einer Schüssel oder eines Kegels oder Hohlkegels aufweisen. Auch Mischformen dieser Konturen sind möglich, um eine vorteilhafte Abdichtung der Ablauföffnung im Betrieb zu ermöglichen. Das Verschlusselement besteht oder umfasst vorteilhaft Dichtungswerkstoff. Als Dichtungswerkstoff kommen die im Bereich einer Brennkraftmaschine üblichen Gummi- oder Elastomer-Werkstoffe in Betracht. Es versteht sich, dass der Dichtungswerkstoff Zuschlagstoffe und/oder Armierungselemente aufweisen kann. Durch die glockenförmige Formgebung sowie die flexible Verformbarkeit des Verschlusselements können selbst größere Maßtoleranzen der Dichtfläche ausgeglichen und ein zuverlässiges Dichtvermögen gewährleistet werden.

Bei dem erfindungsgemäßen Filtersystem kann einem fehlerhaften Einbau eines geeigneten Filterelements ebenso zuverlässig entgegengewirkt werden, wie dem Einbau eines ungeeigneten Filterelements.

Nach einer besonders bevorzugten Weiterbildung der Erfindung weist die untere Endscheibe des Filterelements eine Ringrippe bzw. einen Stutzen auf, der sich in axialer Richtung von der Endscheibe wegerstreckt und welcher mit einer Ausnehmung versehen ist. Dadurch kann einerseits eine besonders langstreckige und sichere drehfeste Arretierung des Filterelements an der Positionierhilfe erreicht werden. Andererseits kann die Endscheibe durch eine solche Ringrippe bzw. einen solchen Stutzen ohne einen nennenswerten zusätzlichen Materialaufwand nochmals besser ausgesteift werden. Eine strukturelle Schwächung der unteren Endscheibe durch die Ausnehmung wird in diesem Falle mithin vermieden. Darüber hinaus kann durch einen solchen Endscheibenstutzen bzw. eine solche Ringrippe erreicht werden, dass die Schraubbewegung im Falle des Einsatzes eines ungeeigneten Filterelements bei der Montage frühzeitig blockiert und ein Anwender dadurch zuverlässig vor dem Einbau eines ungeeigneten Filterelements gewarnt wird.

Der Stutzen kann unter fertigungstechnischen Aspekten insbesondere ringförmig, bevorzugt zylindrisch, ausgebildet sein. In der erfindungsgemäßen Ausführung ist die Ringrippe bzw. der Stutzen als zylindrischer Abschnitt um die Längsachse des Filterelements mit einer Stirnfläche senkrecht zur Längsachse ausgebildet, d. h. ohne geneigte Führungsfläche wie beispielsweise einer Wendel oder Rampe.

Die Endscheibe kann einstückig ausgeführt sein und die Ausnehmung, die Ringrippe bzw. den Stutzen und/oder die Aufnahme für das Verschlusselement unmittelbar ausbilden. Alternativ kann die Endscheibe mehrteilig ausgebildet sein, wobei die Teile der Endscheibe über eine Rast- oder Schweißverbindung fest, insbesondere drehfest, und unlösbar verbunden sind. In einer besonderen Ausführungsform ist die Endscheibe des Filterelements in 2K-Kunststoffspritzgusstechnik hergestellt.

Nach der Erfindung kann die Ausnehmung der unteren Endscheibe des Filterelements zumindest abschnittsweise schlitzförmig ausgebildet sein. Dadurch kann das Filterelement mit seinem Verschlusselement zur Ablauföffnung besonders präzise axial fluchtend ausgerichtet werden. Ein besonderer Vorteil ergibt sich, wenn die Ausnehmung Seitenflanken aufweist, die zumindest eingangsseitig angefast sind. Dadurch kann beispielsweise während der Schraubbewegung einem unerwünschten Verhaken und/oder Verkanten des Filterelements an der Positionierhilfe entgegengewirkt werden. Besonders vorteilhaft ist es, wenn eine Seitenflanke derart angefast ist, dass bei der Schraubbewegung ein Eindringen der Positionierhilfe in die Ausnehmung durch die Fase unterstützt wird.

Die Anordnung der Ringrippe bzw. des Stutzens an der unteren Endscheibe des Filterelements und der Positionierhilfe am Gehäusetopf, insbesondere die Höhe der Ringrippe bzw. des Stutzens einerseits und die Höhe der zu der Ausnehmung des Filterelements korrespondierende Positionierhilfe für das Filterelement am Gehäusetopf andererseits, sind erfindungsgemäß so abgestimmt, dass die Gewinde am Gehäusedeckel und am Gehäusetopf erst ineinandergreifen, nachdem Positionierhilfe und Ausnehmung korrespondieren, so dass Gehäusetopf und Gehäusedeckel erst miteinander verschraubbar sind, wenn die Positionierhilfe in Deckung mit der Ausnehmung ist. So ist das Filterelement axial in Richtung Gehäusetopfboden beweglich, während die Ausnehmung am Element und die Positionierhilfe am Gehäusetopf in Eingriff sind. Der Weg, den das Filterelement nach einem Eingriff axial beweglich ist, ergibt sich aus der axialen Erstreckung der Ausnehmung in der Ringrippe bzw. des Stutzens und der axialen Erstreckung der Positionierhilfe.

Sind Ausnehmung und Positionierhilfe noch nicht im Eingriff, dreht sich das Filterelement aufgrund der reibschlüssigen Verbindung von Gehäusedeckel und Filterelement bei Drehung des Deckels in Einschraubrichtung um die Längsachse des Filterelements. Der freie Rand der Ringrippe bzw. des Stutzens ist dabei in Kontakt mit der korrespondierenden Fläche der Positionierhilfe und verhindert eine Bewegung in Axialrichtung. So wird sichergestellt, dass der Gehäusedeckel auf den Gehäusetopf nur aufschraubbar oder in den Gehäusetopf einschraubbar ist, sofern ein geeignetes Filterelement im Filtergehäuse angeordnet ist.

Die Ringrippe bzw. der Stutzen und die untere Endscheibe des Filterelements sind unter fertigungstechnischen Aspekten vorteilhaft einstückig miteinander ausgebildet. Dadurch kann die Endscheibe mitsamt dem Stutzen, etwa als Spritzgussteil, kostengünstig und einfach hergestellt werden. Die Anzahl von Einzelelementen und somit die Anzahl von Arbeitsschritten zur Montage eines Filterelements bzw. Filtersystems gemäß der Erfindung werden dadurch reduziert. Bei dieser Bauart muss der Stutzen bzw. die Ringrippe bei der Montage des Filterelements im Filtergehäuse darüber hinaus nicht umständlich mit der Ausnehmung in einer spezifischen Drehposition gegenüber der Endscheibe ausgerichtet und lagefixiert gehalten werden.

Die Positionierhilfe ist besonders bevorzugt als ein stift- oder rippenartiger Gehäusevorsprung des Gehäusetopfs ausgebildet. Vorzugsweise erstreckt sich die Positionierhilfe dazu vom Gehäuseboden des Gehäusetopfs weg. In einer anderen Ausführung erstreckt sich die Positionierhilfe von der Innenumfangsfläche des Gehäusetopfes radial nach innen.

In einer alternativen Ausführungsform der Erfindung kann bei gleicher Funktionsweise der Gehäusetopf eine Ringrippe bzw. einen Stutzen und das Filterelement eine Positionierhilfe, beispielsweise in Form eines stift- oder rippenartigen Vorsprungs, aufweisen.

Der Gehäusetopf kann erfindungsgemäß einen (gehäusefesten) Gehäusedom aufweisen. Durch den Gehäusedom kann das Filterelement bei dessen Montage auf einfache Weise im Filtergehäuse zentriert ausgerichtet werden. Die Positionierhilfe ist dabei vorzugsweise zum Gehäusedom in radialer Richtung nach außen versetzt angeordnet. Dadurch ist die Positionierhilfe vom Gehäusedom radial beabstandet, so dass die Positionierhilfe und die Ausnehmung des Filterelements weitgehend frei, insbesondere unabhängig von Lage und Größe des Gehäusedoms, angeordnet werden können.

Eine besonders kostengünstige Herstellung des Filtersystems ergibt sich des Weiteren, wenn die Positionierhilfe und der Gehäusetopf einstückig, zum Beispiel als Spritzgussteil, ausgebildet sind.

Das Filtergehäuse bzw. der Filtertopf können im Hinblick auf eine kostengünstige Massenfertigung insbesondere aus einem Kunststoffmaterial bestehen.

Ein besonderer Vorteil ergibt sich ferner, wenn der Gehäusetopf ein Führungselement für das Verschlusselement aufweist, um das Verschlusselement in seiner zur Ablauföffnung axial fluchtend ausgerichteten Position zu sichern bzw. ein Einführen eines Verschlussstopfens in die Ablauföffnung oder das Absenken eines glockenförmigen Verschlusselements auf die Ablauföffnung zu erleichtern. Das Führungselement ist dabei in Richtung der Schraubbewegung des Gehäusedeckels hinter der Ablauföffnung angeordnet. Die Führungseinrichtung steht nach der Erfindung bevorzugt vom Gehäuseboden des Gehäusetopfs in axialer Richtung weg. Es versteht sich, dass die Abmessungen des Führungselements, insbesondere dessen Höhe, dabei so gewählt sind, dass einerseits eine sichere Führung des Verschlusselements gewährleistet wird, andererseits jedoch das Filterelement während der Schraubbewegung nicht zu früh am Führungselement anschlägt beziehungsweise an diesem in axialer Richtung aufsitzt.

Durch das Führungselement kann einer Beschädigung des Verschlusselements zuverlässig entgegengewirkt werden.

Das Verschlusselement kann als Dichtelement ausgebildet sein. Die Verbindung des Dichtelements mit dem Filterelement kann durch Umspritzen oder Anspritzen eines Dichtmaterials an die Endscheibe des Filterelements erfolgen. Alternativ weist das Verschlusselement einen Halteabschnitt auf, der sich durch eine Durchgangsausnehmung in der Endscheibe hindurcherstreckt. Beispielsweise kann das Verschlusselement in die Endscheibe eingeknüpft sein, d. h. mit einem verdickten Durchmesserabschnitt durch eine kleiner dimensionierte Öffnung in der Endscheibe durchgezogen und formschlüssig gehalten sein.

Nachstehend ist die Erfindung anhand zweier in den Zeichnungen wiedergegebener Ausführungsbeispiele erläutert. Die Bezugszeichen in dem zweiten Ausführungsbeispiel sind gegenüber dem ersten Ausführungsbeispiel in der Nummerierung um 100 erhöht.

In der Zeichnung zeigen:
- Fig. 1: ein Ausführungsbeispiel eines ersten Filtersystems mit einem Filtergehäuse sowie mit einem im Filtergehäuse in seiner vorgegebenen Einbauposition angeordneten Filterelement mit einem als Verschlussstopfen ausgebildeten Verschlusselement, in einer Schnittdarstellung;
- Fig. 2: das Filterelement aus Fig. 1 in einer freigestellten perspektivischen Ansicht;
- Fig. 3: den Filtertopf des Filtersystems gemäß Fig. 1 in einer freigestellten perspektivischen Ansicht;
- Fig. 4: das Filtersystem gemäß Fig. 1 während der Montage des Filterelements im Filtergehäuse;
- Fig. 5: das Filterelement und der Gehäusetopf gemäß Fig. 1 während der Montage des Filterelements und kurz vor einer Arretierung des Filterelements in einer vorgegebenen Drehlage relativ zum Filtertopf, in einer ausschnittsweisen Detaildarstellung;
- Fig. 6: das Filterelement und der Gehäusetopf gemäß Fig. 1 während der Montage des Filterelements und kurz vor einer Arretierung des Filterelements in einer vorgegebenen Drehlage relativ zum Filtertopf, in einer weiteren ausschnittsweisen Detaildarstellung;
- Fig. 7: ein zweites Ausführungsbeispiel eines Filtersystem mit einem Filtergehäuse sowie mit einem im Filtergehäuse in seiner vorgegebenen Einbauposition angeordneten Filterelement mit einem glockenförmigen Verschlusselement, in einer Schnittdarstellung;
- Fig. 8.: das Filterelement aus Fig. 7 in einer freigestellten perspektivischen Ansicht.
- Fig. 9: den Filtertopf des Filtersystems gemäß Fig. 7 in einer freigestellten perspektivischen Ansicht und
- Fig. 10: das Filtersystem gemäß Fig. 7 während der Montage des Filterelements im Filtergehäuse.

### Ausführungsformen der Erfindung

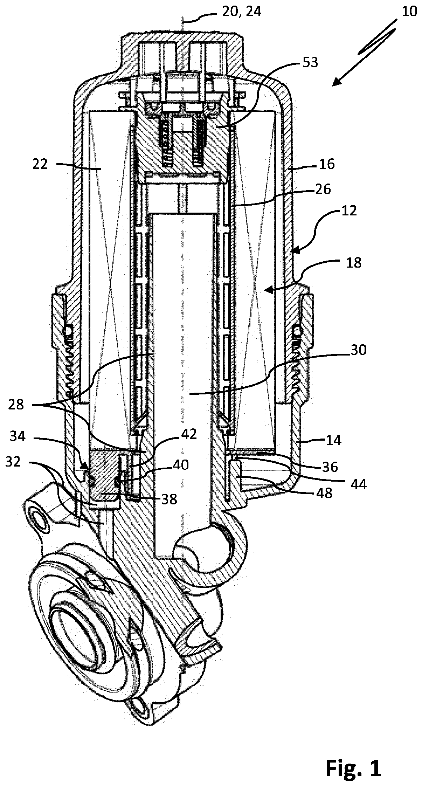

**Fig. 1** zeigt ein Filtersystem **10** für ein zu filterndes Flüssigmedium, insbesondere Kraftstoff oder Öl. Das Filtersystem 10 umfasst ein Filtergehäuse **12** mit einem Gehäusetopf **14** und mit einem Gehäusedeckel **16** zum Verschließen des Gehäusetopfs 14. Der Gehäusedeckel 16 ist hier in den Gehäusetopf 14 einschraubbar, kann aber auch auf den Gehäusetopf 14 aufschraubbar sein. Im Filtergehäuse 12 ist ein Filterelement **18** in seiner vorgegebenen Einbau- bzw. Betriebsposition angeordnet. Die Längsachse des Filtergehäuses 12 ist mit **20** bezeichnet. Das Filterelement 18 weist ein für das jeweilig zu filternde Flüssigmedium geeignetes Filtermedium **22** auf. Das Filtermedium ist hier zur Längsachse **24** des Filterelements 18 ringförmig angeordnet. Das Filterelement 18 ist mithin als ein Rundfilterelement ausgeführt. Das Filtermedium 22 ist im Filterbetrieb des Filtersystems 10 von dem zu filternden Flüssigmedium in einer zur Längsachse 24 des Filterelements 18 radialen Richtung von außen nach innen durchströmbar. Das Filtermedium 22 kann zwecks einer möglichst großen Filterfläche in an sich bekannter Weise als ein sternförmig gefalteter Balg ausgeführt sein. Ein gitterförmiges Stützrohr **26** dient einer radial innenseitigen Abstützung des Filtermediums 22.

Der Gehäusetopf 14 weist bodenseitig einen zentral angeordneten Gehäusedom **28** mit einem reinseitigen Auslasskanal **30** für das gefilterte Flüssigmedium auf. Ein Ablaufkanal **32** mit einer Ablauföffnung **34** dient bei einem Filterelementwechsel einem Ablaufen des im Filtergehäuse 12 bzw. im Filterelement 18 angeordneten Flüssigmediums aus dem Filtergehäuse 12. Durch den Gehäusedom kann dabei ein unerwünschter Übertritt von ungefiltertem (rohseitigem) Flüssigmedium in den reinseitig angeordneten Auslasskanal 30 unterbunden werden. Die Ablauföffnung 34 ist gemäß Fig. 1 von dem zentral angeordneten Gehäusedom in radialer Richtung beabstandet angeordnet.

Das Filterelement 18 weist eine untere Endscheibe **36** auf, die das Filtermedium 22 in axialer Richtung vorzugsweise vollständig überdeckt. Das Filtermedium 22 kann mit der Endscheibe 36 verklebt, verschweißt oder im Material der unteren Endscheibe 36 eingebettet gehalten angeordnet sein. Die Endscheibe 36 kann beispielsweise aus Kunststoff bestehen. Exzentrisch an der Endscheibe 36 ist ein Verschlusspin oder Verschlussstopfen **38** angeformt, der sich von der Endscheibe 36 in axialer Richtung wegerstreckt. Am Verschlussstopfen 38 kann ein ringförmiges Dichtungselement **40** angeordnet sein. Das Dichtungselement 40 ist dabei vorzugsweise als ein Radialdichtungselement ausgeführt. Im gezeigten Betriebszustand des Filtersystems 10 erstreckt sich der Verschlussstopfen über die Ablauföffnung 34 des Ablaufkanals 32 in den Ablaufkanal 32 dichtend hinein. Der Ablaufkanal 32 ist im Betriebszustand des Filtersystems 10 mithin durch das Filterelement 18 fluiddicht verschlossen.

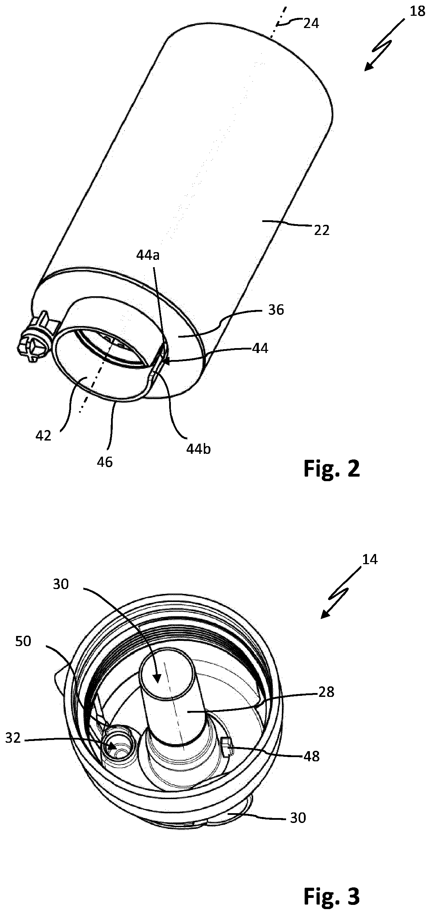

Gemäß Fig. 1 ist an der unteren Endscheibe des Filterelements 18 ein ringförmiger Stutzen **42** angeformt. Der Stutzen 42 ist gemäß der in **Fig. 2** gezeigten freigestellten Ansicht des Filterelements in Form eines zylinderförmigen Kragens ausgebildet und erstreckt sich in axialer Richtung von der unteren Endscheibe 36 des Filterelements 18 weg. Der Stutzen 42 weist eine mit **44** bezeichnete Ausnehmung auf. Die Ausnehmung 44 ist gemäß Fig. 2 in Form eines Schlitzes ausgeführt, der sich vom freien Rand **46** des Stutzens 42 in axialer Richtung wegerstreckt. Die Ausnehmung 44 kann sich bis zur Endscheibe 36 erstrecken. Die Ausnehmung 44 ist hier durch zwei Seitenflanken **44a**, **44b** seitlich begrenzt, die randseitig angefast sein können.

Der Gehäusetopf 14 weist gemäß Fig. 1 eine stift- bzw. zapfenförmige Positionierhilfe 48 für das Filterelement 18 auf, die in der in **Fig. 3** gezeigten perspektivischen Ansicht des Gehäusetopfs 14 gut zu erkennen ist. Die Positionierhilfe 48 ist bezüglich des Gehäusedoms 28 in radialer Richtung nach außen versetzt angeordnet. Die Positionierhilfe 48 kann sich insbesondere bodenseitig vom Gehäusetopf 14 in axialer Richtung wegerstrecken und ist dem Gehäusetopf aus fertigungstechnischen Gründen vorzugsweise angeformt. Im Betriebszustand des Filtersystems 10 (Fig. 1) greift die Positionierhilfe 48 in die Ausnehmung 44 des Stutzens 42 des Filterelements 18 ein. Es versteht sich, dass sich die Positionierhilfe 48 eine konische bzw. keilförmige Form aufweisen kann, um ein Eingreifen der Positionierhilfe 48 in die Ausnehmung 44 zu erleichtern. Die in der Zeichnung gezeigte jeweilig diametral gegenüberliegende Anordnung der Ablauföffnung 34 und der Positionierhilfe 48 des Gehäusetopfs 14 sowie des Verschlussstopfens 38 und der Ausnehmung 44 des Filterelements 18 ist rein beispielhaft zu verstehen. Wesentlich ist, dass der Verschlussstopfen 38 und die Ausnehmung 44 des Filterelements 18 ein zu dem räumlichen Verteilungsmuster der Ablauföffnung 34 des Ablaufkanals 32 und der Positionierhilfe 48 des Gehäusetopfs 14 korrespondierendes räumliches Verteilungsmuster aufweisen. Im Betriebszustand des Filtersystems 10 ist dadurch der gleichzeitige Eingriff des Verschlussstopfens 38 des Filterelements 18 in die gehäuseseitige Ablauföffnung 34 des Ablaufkanals 32 und der Positionierhilfe 48 des Gehäusetopfs 14 in die Ausnehmung 44 des Filterelements 18 gewährleistet.

Der Gehäusetopf 14 kann gemäß Fig. 3 bodenseitig ein Führungselement **50** speziell für den Verschlussstopfen 38 des Filterelements 18 aufweisen. Das Führungselement 50 ist dem Gehäusetopf 14 vorzugsweise angeformt. Das Führungselement 50 steht vom Gehäusetopf 14 bodenseitig in axialer Richtung weg und dient einem erleichterten Einführen des Verschlussstopfens 38 in die Ablauföffnung 34 bzw. den Ablaufkanal 32. Durch das Führungselement 50 kann einer Beschädigung des Verschlussstopfens 38, insbesondere einem Abscheren des Dichtungselements 40 vom Verschlussstopfen 38, entgegengewirkt werden. Das Führungselement 50 befindet sich in Einschraubrichtung **52** des Gehäusedeckels 16 unmittelbar hinter der Ablauföffnung 34 und kann dadurch als ein zusätzliches Anschlagelement für den Verschlussstopfen 38 dienen. Das Führungselement 50 kann darüber hinaus zur Längsachse 20 des Filtergehäuses 12 geringfügig schräg verlaufend angeordnet sein, um so funktionell als eine Einführrampe für den Verschlusstopfen 38 zu dienen.

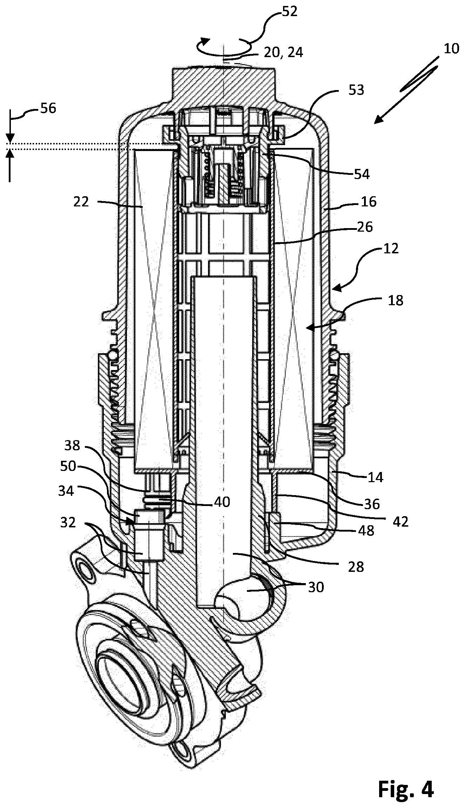

In **Fig. 4** ist das Filtersystem 10 beim Einschrauben des Gehäusedeckels 16 in den Gehäusetopf 14, beispielsweise nach einem Austausch des Filterelements 18, gezeigt. Das Filterelement 18 ist, hier beispielhaft über das Stützrohr 26, an einem Ringstutzen **54** des Gehäusedeckels 16 mit axialem Spiel **56** reibschlüssig gehalten. Der Ringstutzen 54 kann durch den Gehäusedeckel oder durch ein Zusatzbauteil **53**, wie beispielsweise einer Ventilhalterung, ausgebildet sein, das mit dem Gehäusedeckel 16 in Verbindung steht, beispielweise über eine Rastverbindung an dem Gehäusedeckel 16 befestigt ist. Der Reibschluss zwischen dem Stützrohr 26 und dem Ringstutzen 54 kann beispielsweise durch eine elastische Aufweitung des auf den Ringstutzen 54 aufgeschobenen Stützrohrs 26 bewirkt sein. Dadurch ist das Stützrohr 26 auf dem Ringstutzen 54 in radialer Richtung vorgespannt gehalten angeordnet. Aufgrund des Reibschlusses kann das Filterelement 18 vereinfacht in den Filtertopf 14 eingeführt und darin positioniert werden. Das Filterelement 18 kann am Gehäusedeckel auch mit dem axialem Spiel 56 verrastet gehalten angeordnet sein. Der Verschlussstopfen 38 greift gemäß Fig. 4 in den Ablaufkanal 32 noch nicht dichtend ein. Der Stutzen 42 des Filterelements 18 ist zur Positionierhilfe 48 noch axial beabstandet.

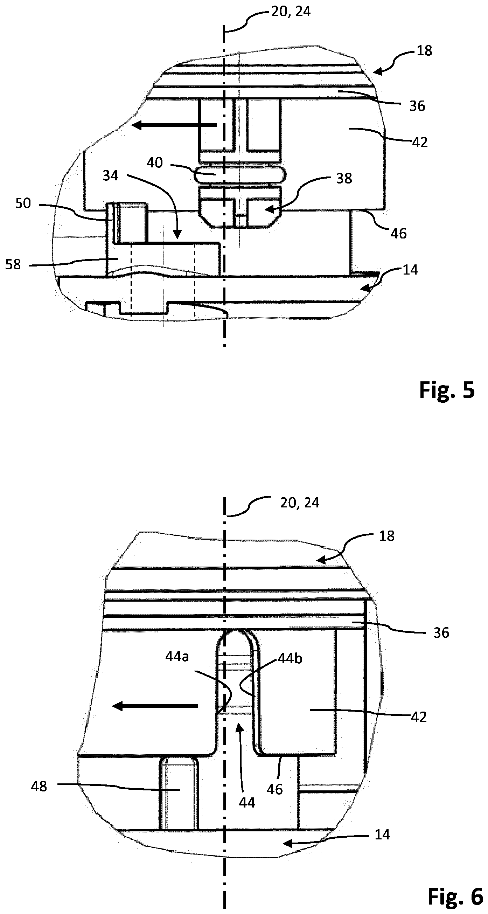

Wird der Gehäusedeckel 16 durch eine in Einschraubrichtung 52 gerichtete Einschraubbewegung weiter in den Gehäusetopf 14 eingeschraubt, so wird das Filterelement 18 von dem Gehäusedeckel 16 mitgenommen und gemeinsam mit diesem rotatorisch um die Längsachse 20 des Filtergehäuses 12 bewegt. Das Filterelement 18 ist in der dargestellten Ausführungsvariante reibschlüssig und/oder formschlüssig an einer Ventilhalterung für ein Bypassventil gehalten. Die Ventilhalterung ist mit dem Gehäusedeckel 16 über eine Rastverbindung verbunden. Das Filterelement 18 wird somit mittels des Gehäusedeckels 16 zugleich in axialer Richtung translatorisch weiter in den Gehäusetopf 14 hineinbewegt. Kontaktiert die Ringrippe bzw. der Stutzen 42 die Positionierhilfe 48 des Gehäusetopfs 14, so ist zunächst eine weitere axiale Bewegung des Filterelements 18 in den Filtertopf hinein unterbunden. Durch ein weiteres Drehen des Gehäusedeckels 16 ist dann eine Verringerung, d. h. ein zumindest teilweiser Aufbrauch, des axialen Spiels 56 zwischen dem Filterelement 18, d. h. hier dem Stützrohr 26, und dem Gehäusedeckel 16 bewirkt. Die gehäuseseitige Positionierhilfe 48 und der Stutzen 42 der unteren Endscheibe 36 des Filterelements 18 wirken mithin im Sinne eines Abstandshalters zusammen, bis die Ausnehmung 44 des Filterelements 18 und die Positionierhilfe des Gehäusetopfs 14 in axialer Richtung miteinander fluchten. Das axiale Spiel des am Gehäusedeckel 16 angeordneten Filterelements 18 ist vorteilhaft derart gewählt, dass der Gehäusedeckel 16 gemeinsam mit dem daran angeordneten Filterelement 18 auch bei einem axialen Kontakt des Stutzens 42 mit der Positionierhilfe 48 zumindest noch eine, vorzugsweise mehr als eine, volle Umdrehung um die Längsachse 20 des Filtergehäuses 12 ausführen kann, um die Ausnehmung 44 des Filterelements 18 mit der Positionierhilfe 48 in einen gegenseitigen Eingriff zu bringen. Durch den zwischen dem Filterelement 18 und dem Gehäusedeckel 16 bestehenden Reibschluss ist dabei sichergestellt, dass der Stutzen 42 an der Positionierhilfe 48 anliegt und die Positionierhilfe 48 in die Ausnehmung 44 eingreift, sobald diese zur Positionierhilfe 48 in axialer Richtung fluchtend angeordnet ist. Sobald die Positionierhilfe 48 in die schlitzförmige Ausnehmung 44 (Fig. 2) des Stutzens 42 des Filterelements 18 eingreift, ist ein weiteres Mitdrehen des Filterelements 18 mit dem in Einschraubrichtung 52 (weiter-)bewegten Gehäusedeckel 16 unterbunden. Mit anderen Worten wird das Filterelement 18 in einer vorgegebenen Drehlage relativ zum Gehäusetopf 14 arretiert. In dieser vorgegebenen Drehlage ist der Verschlussstopfen 38 des Filterelements 18 zur Ablauföffnung 34 des Gehäusetopfs 14 in axialer Richtung fluchtend angeordnet. Dadurch ist gewährleistet, dass das Filterelement 18 bei einer fortgesetzten Schraubbewegung des Gehäusedeckels 16 in Einschraubrichtung 52 und der daraus abgeleiteten axial gerichteten Vorschubbewegung des Filterelements exakt über die Ablauföffnung 34 in seine vorgesehene Dichtposition innerhalb des Ablaufkanals 32 bewegt wird, um diesen fluiddicht zu verschließen. In den **Figuren 5** und **6** sind Gehäusetopf 14 und Filterelement 18 jeweils in einer ausschnittsweisen Detailansicht während der Montage des Gehäusedeckels (Fig. 1) und kurz vor einem Eingriff der Positionierhilfe 48 in die schlitzförmige Ausnehmung 44 des Filterelements 18 gezeigt. Das Filterelement 18 ist in den Fig. 5 und 6 jeweils in derselben Drehlage relativ zum Filtertopf 14 widergegeben. Der Verschlussstopfen 38 ist in axialer Richtung von der Ablauföffnung 34 bzw. einer die Ablauföffnung 34 umgreifenden Gehäusewandung **58** noch deutlich beabstandet. Demgegenüber liegt die Positionierhilfe 48 in derselben Drehlage des Filterelements gemäß Fig. 6 in axialer Richtung bereits am freien Rand 46 des Stutzens 42 der unteren Endscheibe 36 des Filterelements an. Aufgrund des vorstehend erläuterten axialen Spiels zwischen dem Gehäusedeckel (Fig. 1) und dem Filterelement 18 ist ein Weiterdrehen des Gehäusedeckels 16 (Fig. 1) auch bei der bereits vorhandenen gegenseitigen Anlage der Positionierhilfe 48 und des Stutzens 42 ermöglicht, um die Positionierhilfe 48 in Eingriff mit der Ausnehmung 44 der Endscheibe 36 bringen zu können. Wenn also das Filterelement 18 mit der Ringrippe bzw. dem Stutzen 42 auf der Positionierhilfe 48 in axialer Richtung aufsitzt, so ist für das Filterelement 18 bei einer Drehbewegung des Gehäusedeckels 16 eine Relativbewegung in axialer Richtung nur noch zwischen dem Ringstutzen 54 und dem Filterdeckel 16, d. h. in der Schnappverbindung, möglich.

Das in der Zeichnung gezeigte Filterelement 18 kann zusammenfassend allein durch das Einschrauben des Gehäusedeckels 16 in den Gehäusetopf 14 bequem und in der für das axiale Einführen des Verschlussstopfens 38 in den Ablaufkanal 32 erforderlichen Drehlage relativ zum Gehäusetopf 14 überführt und in seiner vorgegebenen Betriebsposition im Dichtsitz am Filtergehäuse 12 (Fig. 1) angeordnet werden.

Durch eine unterschiedliche Anordnung und Ausgestaltung der zueinander korrespondierenden Bauteile, d. h. einerseits des Verschlussstopfens 38 und des Ablaufkanals 32 sowie andererseits der Ausnehmung 44 und der Positionierhilfe 48, kann die alleinige Verwendung geeigneter Filterelemente 18 im Filtergehäuse 12 gewährleistet werden. Dies ist insbesondere bei kritischen Anwendungen von Vorteil. Wird ein ungeeignetes Filterelement 18 ohne den Stutzten 42 bzw. mit dem Stutzen 42 und ohne die Ausnehmung 44 bzw. mit einer fehlerhaft positionierten Ausnehmung 44 in das Filtergehäuse 12 eingesetzt, so kann das Filterelement 18 nicht in seine den Ablaufkanal 32 dichtende Einbau- bzw. Betriebsposition überführt werden. Die Inbetriebnahme des Filtersystems 10 (Fig. 1) ist in diesem Fall nicht möglich.

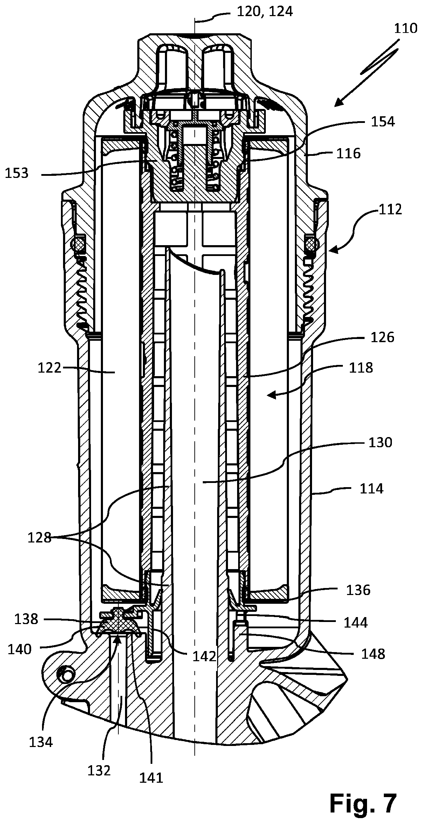

**Fig. 7** zeigt ein ähnliches Filtersystem **110** für ein zu filterndes Flüssigmedium, insbesondere Kraftstoff oder Öl. Das Filtersystem 110 umfasst ein Filtergehäuse **112** mit einem Gehäusetopf **114** und mit einem Gehäusedeckel **116** zum Verschließen des Gehäusetopfs 114. Der Gehäusedeckel 116 ist hier in den Gehäusetopf 114 einschraubbar, kann aber auch auf den Gehäusetopf 114 aufschraubbar sein. Im Filtergehäuse 112 ist ein Filterelement **118** in seiner vorgegebenen Einbau- bzw. Betriebsposition angeordnet. Die Längsachse des Filtergehäuses 112 ist mit **120** bezeichnet. Das Filterelement 118 weist ein für das jeweilig zu filternde Flüssigmedium geeignetes Filtermedium **122** auf. Das Filtermedium ist hier zur Längsachse **124** des Filterelements 118 ringförmig angeordnet. Das Filterelement 118 ist mithin als ein Rundfilterelement ausgeführt. Das Filtermedium 122 ist im Filterbetrieb des Filtersystems 110 von dem zu filternden Flüssigmedium in einer zur Längsachse 124 des Filterelements 118 radialen Richtung von außen nach innen durchströmbar. Das Filtermedium 122 kann zwecks einer möglichst großen Filter-fläche in an sich bekannter Weise als ein sternförmig gefalteter Balg ausgeführt sein. Ein gitterförmiges Stützrohr **126** dient einer radial innenseitigen Abstützung des Filtermediums 122.

Der Gehäusetopf 114 weist bodenseitig einen zentral angeordneten Gehäusedom **128** mit einem reinseitigen Auslasskanal **130** für das gefilterte Flüssigmedium auf. Ein Ablaufkanal **132** mit einer Ablauföffnung **134** dient bei einem Filterelementwechsel einem Ablaufen des im Filtergehäuse 112 bzw. im Filterelement 118 angeordneten Flüssigmediums aus dem Filtergehäuse 112. Durch den Gehäusedom kann dabei ein unerwünschter Übertritt von ungefiltertem (rohseitigem) Flüssigmedium in den reinseitig angeordneten Auslasskanal 130 unterbunden werden. Die Ablauföffnung 132 ist gemäß Fig. 7 von dem zentral angeordneten Gehäusedom in radialer Richtung beabstandet angeordnet.

Das Filterelement 118 weist eine untere Endscheibe **136** auf, die das Filtermedium 122 in axialer Richtung vorzugsweise vollständig überdeckt. Das Filtermedium 122 kann mit der Endscheibe 136 verklebt, verschweißt oder im Material der unteren Endscheibe 136 eingebettet gehalten angeordnet sein. Die Endscheibe 136 kann beispielsweise aus Kunststoff bestehen. Exzentrisch an der Endscheibe 136 ist ein Verschlusselement **138** angeformt, das sich von der Endscheibe 136 in axialer Richtung wegerstreckt. Das Verschlusselement 138 kann als ein im Wesentlichen glocken- oder hohlkegelförmiges Dichtungselement **140** ausgebildet sein. Im gezeigten Betriebszustand des Filtersystems 110 erstreckt sich das Verschlusselement 138 über die Ablauföffnung 134 des Ablaufkanals 132. Dabei liegt das Dichtungselement 140 auf einer die Ablauföffnung 134 umgebenen planen Anlagefläche **141** auf. Dabei weist das Dichtungselement 140 eine Dichtlippe auf, die bei in Dichtposition angeordnetem Dichtungselement 140 an der Anlagefläche 141 in axialer Richtung vorgespannt dichtend anliegt. Diese Anlagefläche 141 kann gegenüber dem umgebenden Gehäuseboden des Gehäusetopfes 114 erhaben sein. Der Ablaufkanal 132 ist im Betriebszustand des Filtersystems 110 mithin durch das Filterelement 118 fluiddicht verschlossen.

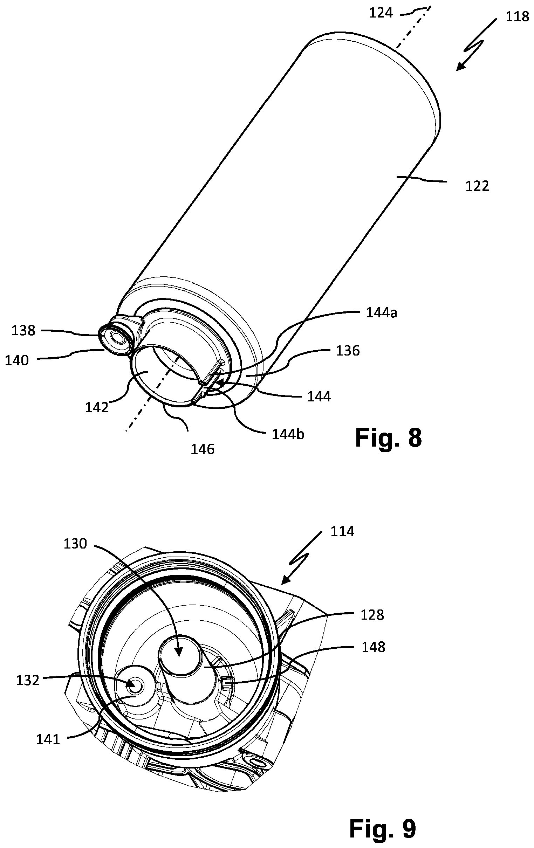

Gemäß Fig. 7 ist an der unteren Endscheibe des Filterelements 118 ein ringförmiger Stutzen **142** angeformt. Der Stutzen 142 ist gemäß der in **Fig. 8** gezeigten freigestellten Ansicht des Filterelements in Form eines zylinderförmigen Kragens ausgebildet und erstreckt sich in axialer Richtung von der unteren Endscheibe 136 des Filterelements 118 weg. Der Stutzen 142 weist eine mit **144** bezeichnete Ausnehmung auf. Die Ausnehmung 144 ist gemäß Fig. 8 in Form eines Schlitzes ausgeführt, der sich vom freien Rand **146** des Stutzens 142 in axialer Richtung wegerstreckt. Die Ausnehmung 144 kann sich bis zur Endscheibe 136 erstrecken. Die Ausnehmung 144 ist hier durch zwei Seitenflanken **144a**, **144b** seitlich begrenzt, die randseitig angefast sein können.

Der Stutzen 142 kann ein Führungselement aufweisen, das einem erleichterten Einführen der Positionierhilfe in die Ausnehmung dient. Das Führungselement befindet sich in Einschraubrichtung **152** des Gehäusedeckels 116 unmittelbar hinter der Ausnehmung 144 und kann dadurch als ein zusätzliches Anschlagelement für die Positionierhilfe dienen. Das Führungselement kann darüber hinaus im montierten Zustand des Filtersystems zur Längsachse des Filtergehäuses geringfügig in eine Vertiefung im Gehäuseboden aufgenommen sein.

Der Gehäusetopf 114 weist gemäß Fig. 7 eine stift- bzw. zapfenförmige Positionierhilfe **148** für das Filterelement 118 auf, die in der in **Fig. 9** gezeigten perspektivischen Ansicht des Gehäusetopfs 114 gut zu erkennen ist. Die Positionierhilfe 148 ist bezüglich des Gehäusedoms 128 in radialer Richtung nach außen versetzt angeordnet. Die Positionierhilfe 148 kann sich insbesondere bodenseitig vom Gehäusetopf 114 in axialer Richtung wegerstrecken und ist dem Gehäusetopf aus fertigungstechnischen Gründen vorzugsweise angeformt. Im Betriebszustand des Filtersystems 110 (Fig. 7) greift die Positionierhilfe 148 in die Ausnehmung 144 des Stutzens 142 des Filterelements 118 ein. Es versteht sich, dass sich die Positionierhilfe 148 eine konische bzw. keilförmige Form aufweisen kann, um ein Eingreifen der Positionierhilfe 148 in die Ausnehmung 144 zu erleichtern. Die in der Zeichnung gezeigte jeweilig diametral gegenüberliegende Anordnung der Ablauföffnung 134 und der Positionierhilfe 148 des Gehäusetopfs 114 sowie des Verschlusselements 138 und der Ausnehmung 144 des Filterelements 118 ist rein beispielhaft zu verstehen. Wesentlich ist, dass das Verschlusselement 138 und die Positionierhilfe 148 des Filterelements 118 ein zu dem räumlichen Verteilungsmuster der Ablauföffnung 134 des Ablaufkanals 132 und der Ausnehmung 144 des Gehäusetopfs 114 korrespondierendes räumliches Verteilungsmuster aufweisen. Im Betriebszustand des Filtersystems 110 ist dadurch die gleichzeitige Überdeckung und Abdichtung des Ablaufkanals 132 durch das Verschlusselement 138 des Filterelements 118 und der Eingriff der Positionierhilfe 148 des Gehäusetopfs 114 in die Ausnehmung 144 des Filterelements 118 gewährleistet.

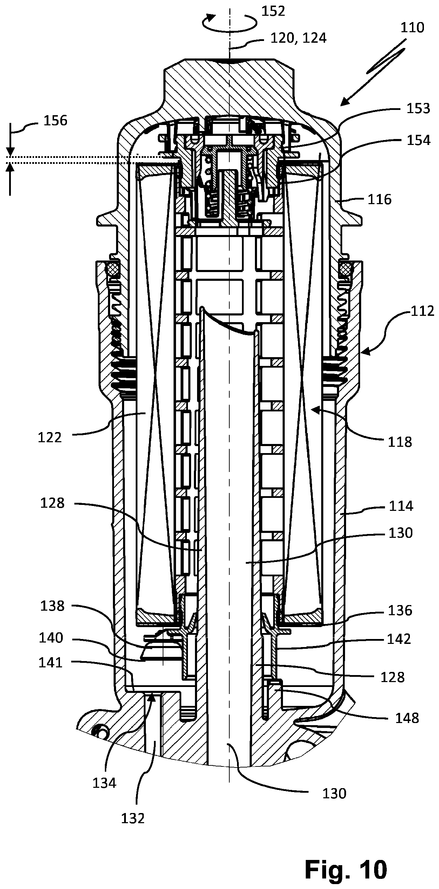

In **Fig. 10** ist das Filtersystem 110 beim Einschrauben des Gehäusedeckels 116 in den Gehäusetopf 114, beispielsweise nach einem Austausch des Filterelements 118, gezeigt. Das Filterelement 118 ist, hier beispielhaft über das Stützrohr 126, an einem Ringstutzen **154** mit axialem Spiel **156** reibschlüssig gehalten. Der Ringstutzen 154 kann durch den Gehäusedeckel ausgebildet sein oder durch ein Zusatzbauteil **153**, wie beispielsweise einer Ventilhalterung, das mit dem Gehäusedeckel 116 in Verbindung steht, beispielweise über eine Rastverbindung an dem Gehäusedeckel 16 befestigt sein. Der Reibschluss zwischen dem Stützrohr 126 und dem Ringstutzen 154 kann beispielsweise durch eine elastische Aufweitung des auf den Ringstutzen 154 aufgeschobenen Stützrohrs 126 bewirkt sein. Dadurch ist das Stützrohr 126 auf dem Ringstutzen 154 in radialer Richtung vorgespannt gehalten angeordnet. Aufgrund des Reibschlusses kann das Filterelement 118 vereinfacht in den Filtertopf 114 eingeführt und darin positioniert werden. Das Filterelement 118 kann am Gehäusedeckel auch mit dem axialem Spiel 156 verrastet gehalten angeordnet sein. Der Stutzen 142 des Filterelements 118 ist zur Positionierhilfe 148 noch axial beabstandet.

Wird der Gehäusedeckel 116 durch eine in Einschraubrichtung 152 gerichtete Einschraubbewegung weiter in den Gehäusetopf 114 eingeschraubt, so wird das Filterelement 118 von dem Gehäusedeckel 116 mitgenommen und gemeinsam mit diesem rotatorisch um die Längsachse 120 des Filtergehäuses 112 bewegt. Das Filterelement 118 ist in der dargestellten Ausführungsvariante reibschlüssig und/oder formschlüssig an einer Ventilhalterung für ein Bypassventil gehalten. Die Ventilhalterung ist mit dem Gehäusedeckel 116 über eine Rastverbindung verbunden. Das Filterelement 118 wird somit mittels des Gehäusedeckels 116 zugleich in axialer Richtung translatorisch weiter in den Gehäusetopf 114 hineinbewegt. Kontaktiert die Ringrippe bzw. der Stutzen 142 die Positionierhilfe 148 des Gehäusetopfs 114, so ist zunächst eine weitere axiale Bewegung des Filterelements 118 in den Filtertopf hinein unterbunden. Durch ein weiteres Drehen des Gehäusedeckels 116 ist dann eine Verringerung, d. h. ein zumindest teilweiser Aufbrauch, des axialen Spiels 156 zwischen dem Filterelement 118, d. h. hier dem Stützrohr 126, und dem Gehäusedeckel 116 bewirkt. Die gehäuseseitige Positionierhilfe 148 und der Stutzen 142 der unteren Endscheibe 136 des Filterelements 118 wirken mithin im Sinne eines Abstandshalters zusammen, bis die Ausnehmung 144 des Filterelements 118 und die Positionierhilfe des Gehäusetopfs 114 in axialer Richtung miteinander fluchten. Das axiale Spiel des am Gehäusedeckel 116 angeordneten Filterelements 118 ist vorteilhaft derart gewählt, dass der Gehäusedeckel 116 gemeinsam mit dem daran angeordneten Filterelement 118 auch bei einem axialen Kontakt des Stutzens 142 mit der Positionierhilfe 148 zumindest noch eine, vorzugsweise mehr als eine, volle Umdrehung um die Längsachse 120 des Filtergehäuses 112 ausführen kann, um die Ausnehmung 144 des Filterelements 118 mit der Positionierhilfe 148 in einen gegenseitigen Eingriff zu bringen. Durch den zwischen dem Filterelement 118 und dem Gehäusedeckel 116 bestehenden Reibschluss ist dabei sichergestellt, dass der Stutzen 142 an der Positionierhilfe 148 anliegt und die Positionierhilfe 148 in die Ausnehmung 144 eingreift, sobald diese zur Positionierhilfe 148 in axialer Richtung fluchtend angeordnet ist. Sobald die Positionierhilfe 148 in die schlitzförmige Ausnehmung 144 (Fig. 8) des Stutzens 142 des Filterelements 118 eingreift, ist ein weiteres Mitdrehen des Filterelements 118 mit dem in Einschraubrichtung 152 (weiter-) bewegten Gehäusedeckel 116 unterbunden. Mit anderen Worten wird das Filterelement 118 in einer vorgegebenen Drehlage relativ zum Gehäusetopf 114 arretiert. In dieser vorgegebenen Drehlage ist das Verschlusselement 138 des Filterelements 118 zur Ablauföffnung 134 des Gehäusetopfs 114 in axialer Richtung fluchtend angeordnet. Dadurch ist gewährleistet, dass das Filterelement 118 bei einer fortgesetzten Schraubbewegung des Gehäusedeckels 116 in Einschraubrichtung 152 und der daraus abgeleiteten axial gerichteten Vorschubbewegung des Filterelements exakt über die Ablauföffnung 134 in seine vorgesehene Dichtposition über dem Ablaufkanal 132 bewegt wird, um diesen fluiddicht zu verschließen.

Das in den Zeichnungen gezeigte Filterelement 118 kann zusammenfassend allein durch das Drehen des Gehäusedeckels 116 in Einschraubrichtung in den Gehäusetopf 114 bequem und in der für die Abdichtung des Ablaufkanals 132 durch das Verschlusselement 138 erforderlichen Drehlage relativ zum Gehäusetopf 114 überführt und in seiner vorgegebenen Betriebsposition am Dichtsitz am Filtergehäuse 112 (Fig. 7) angeordnet werden.

Durch eine unterschiedliche Anordnung und Ausgestaltung der zueinander korrespondierenden Bauteile, d. h. einerseits des Verschlusselements 138 und des Ablaufkanals 132 sowie andererseits der Ausnehmung 144 und der Positionierhilfe 148, kann die alleinige Verwendung geeigneter Filterelemente 118 im Filtergehäuse 112 gewährleistet werden. Dies ist insbesondere bei kritischen Anwendungen von Vorteil. Wird ein ungeeignetes Filterelement 118 ohne den Stutzten 142 bzw. mit dem Stutzen 142 und ohne die Ausnehmung 144 bzw. mit einer fehlerhaft positionierten Ausnehmung 144 in das Filtergehäuse 112 eingesetzt, so kann das Filterelement 118 nicht in seine den Ablaufkanal 132 dichtende Einbau- bzw. Betriebsposition überführt werden. Die Inbetriebnahme des Filtersystems 110 (Fig. 7) ist in diesem Fall nicht möglich.

## Patentansprüche

1. Filtersystem (10, 110) für ein zu filterndes Flüssigmedium, insbesondere Kraftstoff oder Öl, umfassend:
- ein Filtergehäuse (12, 112) mit einem Gehäusetopf (14, 114) und mit einem Gehäusedeckel (16, 116), der mittels einer Schraubbewegung auf den Gehäusetopf (14, 114) aufschraubbar oder in den Gehäusetopf (14, 114) einschraubbar ist, um den Gehäusetopf (14, 114) zu verschließen, wobei der Gehäusetopf (14, 114) einen Ablaufkanal (32, 132) mit einer bodenseitigen Ablauföffnung (34, 134) für das Flüssigmedium aufweist;
- ein Filterelement (18, 118), das an seiner unteren Endscheibe (36, 136) ein Verschlusselement (38, 138) aufweist, das zur Längsachse (24, 124) des Filterelements (18, 118) exzentrisch angeordnet ist und welches sich in einer vorgegebenen Einbauposition des Filterelements (18, 118) im Filtergehäuse (12, 112) dichtend über eine bodenseitige Ablauföffnung (34, 134) des Ablaufkanals (32, 132) des Gehäusetopfs (14, 114) erstreckt oder in die bodenseitige Ablauföffnung (34, 134) des Ablaufkanals (32, 132) des Gehäusetopfs (14, 114) dichtend hineinerstreckt, wobei die untere Endscheibe (36, 136) des Filterelements (18, 118) einen Stutzen (42, 142) aufweist, der sich in axialer Richtung von der unteren Endscheibe (36, 136) wegerstreckt und welcher mit einer Ausnehmung (44, 144) versehen ist, wobei der Stutzen (42, 142) als zylindrischer Abschnitt um die Längsachse (24, 124) des Filterelements (18, 118) mit einer Stirnfläche senkrecht zur Längsachse (24, 124) ausgebildet ist,
wobei die untere Endscheibe (36, 136) des Filterelements (18, 118) die Ausnehmung (44, 144) und der Gehäusetopf (14, 114) eine zu der Ausnehmung (44, 144) korrespondierende Positionierhilfe (48, 148) aufweist und
wobei das Filterelement (18, 118) mittels der Schraubbewegung des Gehäusedeckels (16, 116) axial in Richtung der Ablauföffnung (34, 134) bewegbar und soweit gemeinsam mit dem Gehäusedeckel (16, 116) um seine Längsachse (24, 124) drehbar ist, bis die Positionierhilfe (48, 148) in die Ausnehmung (44, 144) der unteren Endscheibe (36, 136) eingreift und das Filterelement (18, 118) in einer vorgegebenen Drehlage relativ zum Gehäusetopf (14, 114) arretiert, in der das Verschlusselement (38, 138) zur Ablauföffnung (34, 134) axial fluchtend ausgerichtet ist, und
wobei das Filterelement (18, 118) mittels der Schraubbewegung des Gehäusedeckels (16, 116) in axialer Richtung in seine vorgegebene Einbauposition im Filtergehäuse (12, 112) bewegbar ist, **dadurch gekennzeichnet, dass** die Ausgestaltung der Ausnehmung (44, 144) und der Positionierhilfe (48, 148) so korrespondieren, dass ein Ineinandergreifen der Gewinde am Gehäusedeckel (16, 116) und am Gehäusetopf (14, 114) nur bei Deckung der Ausnehmung mit der Positionierhilfe (48, 148) möglich ist.

2. Filtersystem (10, 110) nach Anspruch 1, **dadurch gekennzeichnet, dass** die bodenseitige Ablauföffnung (34, 134) des Ablaufkanal (32, 132) im Gehäusetopf (14, 114) von einer planen Anlagefläche (141) umgeben ist.

3. Filtersystem (10, 110) nach einem der vorhergehenden Ansprüche, **dadurch gekennzeichnet, dass** die Anordnung der Ablauföffnung (34, 134) des Ablaufkanals (32, 132) im Gehäusetopf (14, 114) relativ zur Positionierhilfe (48, 148) am Gehäusetopf (14, 114) korrespondiert mit der Anordnung des Verschlusselements (38, 138) am Filterelement (18, 118) relativ zur Ausnehmung (44, 144) der unteren Endscheibe (36, 136) des Filterelements (18, 118).

4. Filtersystem (10, 110) nach einem der vorhergehenden Ansprüche, **dadurch gekennzeichnet, dass** die Positionierhilfe (48, 148) als ein stift- oder rippenartiger Gehäusevorsprung des Gehäusetopfs (14, 114) ausgebildet ist.

5. Filtersystem (10, 110) nach einem der vorhergehenden Ansprüche, **dadurch gekennzeichnet, dass** der Gehäusetopf (14, 114) einen Gehäusedom (28, 128) aufweist, wobei die Positionierhilfe (48, 148) relativ zum Gehäusedom (28, 128) in einer zur Längsachse (20, 120) des Filtergehäuses (12, 112) radialen Richtung nach außen versetzt angeordnet ist.

6. Filtersystem (10, 110) nach einem der vorhergehenden Ansprüche, **dadurch gekennzeichnet, dass** die Positionierhilfe (48, 148) und der Gehäusetopf (14, 114) einstückig miteinander ausgebildet sind.

7. Filterelement (18, 118) für ein Filtersystem nach einem der vorhergehenden Ansprüche, **dadurch gekennzeichnet, dass** an einer unteren Endscheibe (36, 136) des Filterelements (18, 118) ein Verschlusselement (38, 138) angeordnet ist, wobei das Verschlusselement (38, 138) zur Längsachse (24, 124) des Filterelements (18, 118) exzentrisch angeordnet ist, wobei die untere Endscheibe (36, 136) des Filterelements (18, 118) einen Stutzen (42, 142) aufweist, der sich in axialer Richtung von der unteren Endscheibe (36, 136) wegerstreckt und welcher mit einer Ausnehmung (44, 144) versehen ist, wobei der Stutzen (42, 142) als zylindrischer Abschnitt um die Längsachse (24, 124) des Filterelements (18, 118) mit einer Stirnfläche senkrecht zur Längsachse (24, 124) ausgebildet ist.

8. Filterelement (18, 118) nach Anspruch 7, **dadurch gekennzeichnet, dass** die Ausnehmung (44, 144) zumindest abschnittsweise schlitzförmig ausgebildet ist.

9. Filterelement (18, 118) nach einem der Ansprüche 7 oder 8, **dadurch gekennzeichnet, dass** die Ausnehmung (44, 144) angefaste Seitenflanken (44a, 44b, 144a, 144b) aufweist.

10. Filterelement (18, 118) nach einem der Ansprüche 7 bis 9, **dadurch gekennzeichnet, dass** der Stutzen (42, 142) und die untere Endscheibe (36, 136) einstückig miteinander ausgebildet sind.

11. Filterelement (18, 118) nach einem der Ansprüche 7 bis 10, **dadurch gekennzeichnet, dass** die Dichtfläche des Verschlusselements (38, 138) und das axiale Ende der Ausnehmung (44, 144) bezogen auf die Längsachse (20, 120) des Filtergehäuses (12, 112) beabstandet angeordnet sind.

12. Filterelement (18, 118) nach einem der Ansprüche 7 bis 11, **dadurch gekennzeichnet, dass** das Verschlusselement (38, 138) glockenförmig ausgebildet ist.

13. Filterelement (18, 118) nach einem der Ansprüche 7 bis 12, **dadurch gekennzeichnet, dass** das Verschlusselement (38, 138) in die Endscheibe (36, 136) des Filterelements (18, 118) eingeknüpft ist.

## Claims

1. Filter system (10, 110) for a liquid medium to be filtered, in particular fuel or oil, comprising:
- a filter housing (12, 112) having a housing pot (14, 114) and having a housing cover (16, 116) screwable onto the housing pot (14, 114) using a screwing movement or screwable into the housing pot (14, 114) in order to close the housing pot (14, 114), wherein the housing pot (14, 114) features a drain channel (32, 132) having a bottom-side drain opening (34, 134) for the liquid medium;
- a filter element (18, 118) featuring on its lower end disc (36, 136) a closure member (38, 138) disposed eccentrically relative to the longitudinal axis (24, 124) of the filter element (18, 118), said closure member extending sealingly in a predetermined mounting position of the filter element (18, 118) in the filter housing (12, 112) via a bottom-side drain opening (34, 134) of the drain channel (32, 132) of the housing pot (14, 114) or extending sealingly into the bottom-side drain opening (34, 134) of the drain channel (32, 132) of the housing pot (14, 114), wherein the lower end disc (36, 136) of the filter element (18, 118) features a pipe connection (42, 142) extending away from the lower end disc (36, 136) in the axial direction and having a recess (44, 144), wherein the pipe connection (42, 142) is designed as a cylindrical section around the longitudinal axis (24, 124) of the filter element (18, 118) with an end face perpendicular to the longitudinal axis (24, 124),
wherein the lower end disc (36, 136) of the filter element (18, 118) features the recess (44, 144) and the housing pot (14, 114) a positioning device (48, 148) corresponding to the recess (44, 144) and
wherein the filter element (18, 118) is axially movable in the direction of the drain opening (34, 134) using the screwing movement of the housing cover (16, 116) and collectively rotatable with the housing cover (16, 116) around its longitudinal axis (24, 124) until the positioning device (48, 148) engages in the recess (44, 144) of the lower end disc (36, 136) and locks the filter element (18, 118) in a predetermined rotational position relative to the housing pot (14, 114), in which the closure member (38, 138) is axially aligned with the drain opening (34, 134), and
wherein the filter element (18, 118) is movable in the axial direction into its predetermined mounting position in the filter housing (12, 112) using the screwing movement of the housing cover (16, 116), **characterized in that** the design of the recess (44, 144) and the positioning device (48, 148) correspond in such a way that an engagement of the threads on the housing cover (16, 116) and on the housing pot (14, 114) is only possible upon congruence of the recess with the positioning device (48, 148).

2. Filter system (10, 110) according to claim 1, **characterized in that** the bottom-side drain opening (34, 134) of the drain channel (32, 132) in the housing pot (14, 114) is surrounded by a flat contact surface (141).

3. Filter system (10, 110) according to one of the preceding claims, **characterized in that** the arrangement of the drain opening (34, 134) of the drain channel (32, 132) in the housing pot (14, 114) relative to the positioning device (48, 148) on the housing pot (14, 114) corresponds to the arrangement of the closure member (38, 138) on the filter element (18, 118) relative to the recess (44, 144) of the lower end disc (36, 136) of the filter element (18, 118).

4. Filter system (10, 110) according to one of the preceding claims, **characterized in that** the positioning device (48, 148) is designed as a pin-like or rib-like housing projection of the housing pot (14, 114).

5. Filter system (10, 110) according to one of the preceding claims, **characterized in that** the housing pot (14, 114) features a housing dome (28, 128), wherein the positioning device (48, 148) is disposed outwardly offset relative to the housing dome (28, 128) in a radial direction with respect to the longitudinal axis (20, 120) of the filter housing (12, 112).

6. Filter system (10, 110) according to one of the preceding claims, **characterized in that** the positioning device (48, 148) and the housing pot (14, 114) are designed in one piece.

7. Filter element (18, 118) for a filter system according to one of the preceding claims, **characterized in that** a closure member (38, 138) is disposed on a lower end disc (36, 136) of the filter element (18, 118), wherein the closure member (38, 138) is disposed eccentrically with respect to the longitudinal axis (24, 124) of the filter element (18, 118), wherein the lower end disc (36, 136) of the filter element (18, 118) features a pipe connection (42, 142) extending away from the lower end disc (36, 136) in the axial direction and being provided with a recess (44, 144), wherein the pipe connection (42, 142) is designed as a cylindrical section around the longitudinal axis (24, 124) of the filter element (18, 118) with an end face perpendicular to the longitudinal axis (24, 124).

8. Filter element (18, 118) according to claim 7, **characterized in that** the recess (44, 144) is designed at least section-wise in a slit-shaped manner.

9. Filter element (18, 118) according to one of the claims 7 or 8, **characterized in that** the recess (44, 144) features chamfered side flanks (44a, 44b, 144a, 144b).

10. Filter element (18, 118) according to one of the claims 7 to 9, **characterized in that** the pipe connection (42, 142) and the lower end disc (36, 136) are designed in one piece.

11. Filter element (18, 118) according to one of the claims 7 to 10, **characterized in that** the sealing surface of the closure member (38, 138) and the axial end of the recess (44, 144) are disposed spaced apart with respect to the longitudinal axis (20, 120) of the filter housing (12, 112).

12. Filter element (18, 118) according to one of the claims 7 to 11, **characterized in that** the closure member (38, 138) has a bell-shaped design.

13. Filter element (18, 118) according to one of the claims 7 to 12, **characterized in that** the closure member (38, 138) is knotted into the end disc (36, 136) of the filter element (18, 118).

## Revendications

1. Système de filtre (10, 110) pour un milieu liquide à filtrer, notamment du carburant ou de l'huile, comprenant:
- un boîtier de filtre (12, 112) ayant un pot de boîtier (14, 114) et ayant un couvercle de boîtier (16, 116) qui peut être vissé sur le pot de boîtier (14, 114) par un mouvement de vissage ou qui peut être vissé dans le pot de boîtier (14, 114) pour fermer le pot de boîtier (14, 114), dans lequel le pot de boîtier (14, 114) présente un canal d'écoulement (32, 132) ayant une ouverture d'écoulement (34, 134) côté fond pour le milieu liquide;
- un élément de filtre (18, 118) qui présente sur son disque d'extrémité inférieur (36, 136) un élément de fermeture (38, 138) disposé de manière excentrique par rapport à l'axe longitudinal (24, 124) de l'élément de filtre (18, 118) et qui, dans une position de montage prédéfinie de l'élément de filtre (18, 118) dans le boîtier de filtre (12, 112) s'étend de manière étanche par une ouverture d'écoulement (34, 134) côté fond du canal d'écoulement (32, 132) du pot de boîtier (14, 114) ou s'étend de manière étanche dans l'ouverture d'écoulement (34, 134) côté fond du canal d'écoulement (32, 132) du pot de boîtier (14, 114), dans lequel le disque d'extrémité inférieur (36, 136) de l'élément de filtre (18, 118) présente une tubulure (42, 142) qui s'étend dans le sens axial à partir du disque d'extrémité inférieur (36, 136) et qui est pourvue d'un évidement (44, 144), dans lequel la tubulure (42, 142) est conçue en tant que section cylindrique autour de l'axe longitudinal (24, 124) de l'élément de filtre (18, 118) avec une face frontale perpendiculaire à l'axe longitudinal (24, 124),
dans lequel le disque d'extrémité inférieur (36, 136) de l'élément de filtre (18, 118) présente l'évidement (44, 144) et le pot de boîtier (14, 114) une aide au positionnement (48, 148) correspondant à l'évidement (44, 144) et
dans lequel l'élément de filtre (18, 118) peut être déplacé axialement en direction de l'ouverture d'écoulement (34, 134) au moyen du mouvement de vissage du couvercle de boîtier (16, 116) et peut tourner autour de son axe longitudinal (24, 124) en même temps que le couvercle de boîtier (16, 116) jusqu'à ce que l'aide au positionnement (48, 148) s'engage dans l'évidement (44, 144) du disque d'extrémité inférieur (36, 136) et bloque l'élément de filtre (18, 118) dans une position de rotation prédéfinie par rapport au pot de boîtier (14, 114), dans laquelle l'élément de fermeture (38, 138) est aligné axialement avec l'ouverture d'écoulement (34, 134), et
dans lequel l'élément de filtre (18, 118) peut être déplacé par le mouvement de vissage du couvercle de boîtier (16, 116) dans le sens axial dans sa position de montage prédéterminée dans le boîtier de filtre (12, 112), **caractérisé en ce que** la configuration de l'évidement (44, 144) et de l'aide au positionnement (48, 148) correspondent de telle sorte qu'un engrènement des filetages sur le couvercle de boîtier (16, 116) et sur le pot de boîtier (14, 114) n'est possible que lorsque l'évidement coïncide avec l'aide au positionnement (48, 148).

2. Système de filtre (10, 110) selon la revendication 1, **caractérisé en ce que** l'ouverture d'écoulement (34, 134) côté fond du canal d'écoulement (32, 132) dans le pot de boîtier (14, 114) est entourée par une surface d'appui plane (141).

3. Système de filtre (10, 110) selon l'une quelconque des revendications précédentes, **caractérisé en ce que** la disposition de l'ouverture d'écoulement (34, 134) du canal d'écoulement (32, 132) dans le pot de boîtier (14, 114) par rapport à l'aide au positionnement (48, 148) sur le pot de boîtier (14, 114) correspond à la disposition de l'élément de fermeture (38, 138) sur l'élément de filtre (18, 118) par rapport à l'évidement (44, 144) du disque d'extrémité inférieur (36, 136) de l'élément de filtre (18, 118).

4. Système de filtre (10, 110) selon l'une quelconque des revendications précédentes, **caractérisé en ce que** l'aide au positionnement (48, 148) est conçue en tant que saillie de boîtier en forme de broche ou de nervure du pot de boîtier (14, 114).

5. Système de filtre (10, 110) selon l'une quelconque des revendications précédentes, **caractérisé en ce que** le pot de boîtier (14, 114) présente un dôme de boîtier (28, 128), dans lequel l'aide au positionnement (48, 148) est décalée vers l'extérieur par rapport au dôme de boîtier (28, 128) dans une direction radiale à l'axe longitudinal (20, 120) du boîtier de filtre (12, 112).

6. Système de filtre (10, 110) selon l'une quelconque des revendications précédentes, **caractérisé en ce que** l'aide au positionnement (48, 148) et le pot de boîtier (14, 114) sont conçus d'un seul tenant.

7. Elément de filtre (18, 118) pour un système de filtre selon l'une quelconque des revendications précédentes, **caractérisé en ce qu'**un élément de fermeture (38, 138) est disposé sur un disque d'extrémité inférieur (36, 136) de l'élément de filtre (18, 118), dans lequel l'élément de fermeture (38, 138) est disposé de manière excentrique par rapport à l'axe longitudinal (24, 124) de l'élément de filtre (18, 118), dans lequel le disque d'extrémité inférieur (36, 136) de l'élément de filtre (18, 118) présente une tubulure (42, 142) qui s'étend dans le sens axial à partir du disque d'extrémité inférieur (36, 136) et qui est pourvue d'un évidement (44, 144), dans lequel la tubulure (42, 142) est conçue en tant que section cylindrique autour de l'axe longitudinal (24, 124) de l'élément de filtre (18, 118) avec une face frontale perpendiculaire à l'axe longitudinal (24, 124).

8. Elément de filtre (18, 118) selon la revendication 7, **caractérisé en ce que** l'évidement (44, 144) est conçu au moins par sections en forme de fente.

9. Elément de filtre (18, 118) selon l'une quelconque des revendications 7 ou 8, **caractérisé en ce que** l'évidement (44, 144) présente des flancs latéraux chanfreinés (44a, 44b, 144a, 144b).

10. Elément de filtre (18, 118) selon l'une quelconque des revendications 7 à 9, **caractérisé en ce que** la tubulure (42, 142) et le disque d'extrémité inférieur (36, 136) sont conçus d'un seul tenant.

11. Elément de filtre (18, 118) selon l'une quelconque des revendications 7 à 10, **caractérisé en ce que** la surface d'étanchéité de l'élément de fermeture (38, 138) et l'extrémité axiale de l'évidement (44, 144) sont disposées à distance par rapport à l'axe longitudinal (20, 120) du boîtier de filtre (12, 112).

12. Elément de filtre (18, 118) selon l'une quelconque des revendications 7 à 11, **caractérisé en ce que** l'élément de fermeture (38, 138) est conçu en forme de cloche.

13. Elément de filtre (18, 118) selon l'une quelconque des revendications 7 à 12, **caractérisé en ce que** l'élément de fermeture (38, 138) est noué dans le disque d'extrémité (36, 136) de l'élément de filtre (18, 118).
